# DEMANDE DE BREVET EUROPEEN

(11) **EP 3 699 477 A1**
(43) Date de publication de la demande: **26.08.2020**
(21) Numéro de dépôt: 20158367.1
(22) Date de dépôt: 19.02.2020
(51) Int. Cl.: F17C 5/02, A01N 1/00, F16L 27/12

(54) **DISPOSITIF DE TRANSVASEMENT DE FLUIDE CRYOGÉNIQUE À CANNE DE DISTRIBUTION ET TUBE D'ÉCOULEMENT**

(30) Priorité: 20.02.2019 FR 1901713
(71) Demandeur: Commissariat à l'énergie atomique et aux énergies alternatives, 75015 Paris (FR)
(72) Inventeur: SAUVAGNARGUES, Eric, 38054 Grenoble Cedex 09 (FR); BOCQUILLON, Anne, 38054 Grenoble Cedex 09 (FR)
(74) Mandataire: GIE Innovation Competence Group

(57) **Abrégé**

Dispositif de transvasement manuel (4) de fluide cryogénique, comportant une canne de distribution (5) verticale qui présente une sortie de fluide et un tube d'écoulement (7) entourant la canne de distribution (5) et monté coulissant verticalement sur la canne de distribution (5), entre une positon haute et une position basse, la canne de distribution (5) comportant une butée basse et le tube d'écoulement (7) comportant une contrebutée basse, la butée basse et la contrebutée basse étant agencées pour maintenir le tube d'écoulement (7) dans une unique position stable basse par rapport à la canne de distribution (5), le tube d'écoulement (7) comportant une poignée (9).

## Description

### DOMAINE TECHNIQUE

L'invention a trait au domaine de la cryogénie et concerne plus particulièrement un dispositif permettant de transvaser manuellement un fluide cryogénique d'un contenant vers un autre contenant.

Le domaine de la cryogénie met en oeuvre des moyens pour produire, stocker et manipuler des fluides cryogéniques dont la température est en général inférieure à -150° C. De tels fluides cryogéniques sont régulièrement employés pour des applications nécessitant d'abaisser fortement la température d'un corps, telles que par exemple les applications de cryoconservation ou supraconductivité.

Une application particulière au sein du domaine de la cryogénie concerne le travail en laboratoire mettant en œuvre un fluide cryogénique conditionné dans une bouteille isotherme tel qu'un vase Dewar. Une telle bouteille isotherme, facile à manipuler et adaptée ainsi au travail en laboratoire, doit être régulièrement remplie manuellement à partir d'un réservoir contenant le fluide cryogénique. Par exemple, les laboratoires stockent typiquement le fluide cryogénique dans des réservoirs de 200 litres auprès desquels des bouteilles isothermes facilement manipulables de 4 litres sont remplies manuellement.

L'opération de remplissage manuel d'une bouteille isotherme à partir d'un réservoir de fluide cryogénique est une opération particulièrement dangereuse, car elle est réalisée manuellement avec une bouteille isotherme mobile. La très basse température des fluides cryogéniques les rendent dangereux pour les opérateurs car ils entrainent de graves brulures en cas de contact avec le corps humain, d'où l'obligation de porter des équipements de protection individuels (gants anti-froid, ...) ce qui augmente sensiblement le risque de renversement ou de mauvaise manipulation.

### ART ANTÉRIEUR

Parmi les techniques utilisées actuellement pour transvaser manuellement un fluide cryogénique d'un réservoir vers une bouteille isotherme, la solution la plus efficiente consiste à utiliser une canne de distribution verticale rigide fixée sur le réservoir et présentant sur sa partie basse une sortie de fluide. Le fluide cryogénique contenu dans le réservoir est mis en pression ou pompé, de sorte qu'il s'écoule dans la canne de distribution et soit délivré au niveau de la sortie de fluide.

Cette solution couramment employée présente des inconvénients en matière de sécurité car, pour éviter que le liquide cryogénique ne soit directement vaporisé au contact de l'air ambiant, il faut obligatoirement que la canne de distribution pénètre profondément à l'intérieur de la bouteille isotherme. En effet, ce n'est que lorsque l'intérieur de la bouteille isotherme de destination atteint une température proche de la température du fluide cryogénique que le phénomène de vaporisation s'estompera et qu'il y aura alors un écoulement en phase liquide. Cette contrainte impose le maintien en hauteur de la bouteille isotherme pendant toute la durée du transvasement. Une défaillance de ce système de maintien peut entrainer le renversement de la bouteille isotherme avec les dangereuses conséquences qui en découlent.

Par ailleurs, une fois la bouteille isotherme remplie, cette dernière doit être soulevée pour pouvoir enlever le dispositif de maintien en hauteur pour ensuite la faire descendre afin de lui faire échapper la canne de distribution. Ces manipulations sont rendues plus délicates par l'obligation de porter les équipements de protection individuels (gants anti-froid, ...).

Pour pallier ces inconvénients, certaines solutions proposent des dispositifs de transvasement d'un réservoir à une bouteille isotherme, munis non pas de canne de distribution rigide mais d'un flexible de distribution qui est manipulé par l'opérateur. Ce type de solution présente un niveau de risque similaire dans la mesure où la manipulation du flexible et son emboitement dans la bouteille isotherme se font par l'opérateur muni de gants anti-froid et du fait que le flexible doit être maintenu manuellement pendant l'intégralité de l'opération de remplissage afin d'éviter un risque de renversement de la bouteille isotherme.

Par ailleurs, les documents FR2080191 et US2008/0169037 décrivent respectivement une canne de prélèvement pour ligne de transfert de liquide cryogénique, et une connexion cryogénique à baïonnette.

### EXPOSÉ DE L'INVENTION

L'invention a pour but d'améliorer les dispositifs de transvasement de fluide cryogénique de l'art antérieur, en proposant un tel dispositif de transvasement qui met en œuvre de manière sécurisée une canne de distribution.

À cet effet, l'invention vise un dispositif de transvasement manuel de fluide cryogénique, comportant une canne de distribution verticale qui présente une sortie de fluide. Ce dispositif comporte un tube d'écoulement entourant la canne de distribution et monté coulissant verticalement sur la canne de distribution, entre une positon haute et une position basse, la canne de distribution comportant une butée basse et le tube d'écoulement comportant une contrebutée basse, la butée basse et la contrebutée basse étant agencées pour maintenir le tube d'écoulement dans une unique position stable basse par rapport à la canne de distribution, le tube d'écoulement comportant une poignée.

Un autre objet vise un procédé de transvasement manuel, mettant en œuvre un dispositif de transvasement tel que décrit ci-dessus, et comportant les étapes suivantes, le tube d'écoulement étant initialement dans sa position basse stable :
- relier l'une des extrémités de la canne de distribution, à une tête de sortie d'un réservoir de fluide cryogénique ;
- translater verticalement le tube d'écoulement par rapport à la canne de distribution et maintenir le tube d'écoulement en position haute ;
- présenter une bouteille isotherme sous le tube d'écoulement ;
- accompagner la descente du tube d'écoulement vers sa positon basse stable en introduisant le tube d'écoulement dans la bouteille isotherme.

Selon une caractéristique préférée, au cours de l'étape d'accompagner la descente du tube d'écoulement, le procédé comporte une opération de pivotement du tube d'écoulement autour d'un axe horizontal pour introduire le tube d'écoulement dans la bouteille isotherme.

Selon une autre caractéristique préférée, le procédé comporte en outre les étapes suivantes :
- transvaser le fluide cryogénique dans la bouteille isotherme ;
- relever le tube d'écoulement en le translatant verticalement par rapport à la canne de distribution, et maintenir le tube d'écoulement en position haute ;
- déplacer la bouteille isotherme ;
- accompagner la descente du tube d'écoulement vers sa positon basse stable.

Un tel dispositif et procédé de transvasement ne requiert aucun mouvement spécifique de la bouteille isotherme en vue de son raccord au réservoir, et ne requiert aucun dispositif de maintien de la bouteille isotherme à une certaine hauteur. La bouteille isotherme reste en effet à la même hauteur, quelle que soit la phase du transvasement. Elle peut ainsi rester au sol pendant toute la durée de transvasement ou sur tout autre élément permettant son déplacement, tel qu'un charriot à roulettes.

Le dispositif de transvasement n'ayant qu'une seule position stable, le risque de renversement de la bouteille isotherme en cours de transvasement est supprimé.

De plus, l'opérateur muni de ses gants anti-froid manipule uniquement le tube d'écoulement dans son mouvement de translation verticale, seul mouvement autorisé. Cette manipulation n'exige pas de dextérité particulière.

La butée basse et la contrebutée basse permettent un réglage de la hauteur du tube d'écoulement dans sa position basse, c'est-à-dire de la hauteur à laquelle est délivré le fluide cryogénique. Ainsi, la butée basse et la contrebutée basse peuvent être ajustées pour une configuration particulière afin que le fluide cryogénique soit délivré au plus proche du fond de la bouteille isotherme, sans réglages particuliers de la part de l'opérateur une fois cette hauteur définie.

Le dispositif de transvasement peut comporter les caractéristiques additionnelles suivantes, seules ou en combinaison :
- la butée basse est fixée sur le contour de la sortie de fluide de la canne de distribution ;
- le tube d'écoulement est ajusté sur la butée basse selon un ajustement glissant permettant le coulissement vertical du tube d'écoulement par rapport à la butée basse ;
- la plus petite dimension interne en section du tube d'écoulement est supérieure d'au moins 10 % par rapport à la dimension externe de la section correspondante de la canne de distribution ;
- la contrebutée basse comporte un palier muni d'un orifice central cylindrique constituant la plus petite dimension interne de la section du tube d'écoulement ;
- le tube d'écoulement comporte des moyens antirotation bloquant la rotation autour d'un axe vertical du tube d'écoulement par rapport à la canne de distribution ;
- le tube d'écoulement comporte des rainures longitudinales, les moyens antirotation étant constitués par un ajustement glissant entre le tube d'écoulement et la butée basse ;
- la butée basse est ajustée entre les rainures longitudinales.

### PRÉSENTATION DES FIGURES

D'autres caractéristiques et avantages de l'invention ressortiront de la description qui en est faite ci-après, à titre indicatif et nullement limitatif, en référence aux dessins annexés, dans lesquels :
[Fig.1] La figure 1 représente en perspective une opération de transvasement entre un réservoir et une bouteille isotherme grâce à un dispositif de transvasement selon l'invention ;
[Fig.2] La figure 2 est une vue en coupe schématique représentant le dispositif de transvasement de la figure 1 ;
[Fig.3] La figure 3 représente une étape d'une opération de transvasement mettant en œuvre le dispositif de transvasement de la figure 2 ;
[Fig.4] La figure 4 représente une autre étape d'une opération de transvasement mettant en œuvre le dispositif de transvasement de la figure 2 ;
[Fig.5] La figure 5 représente une autre étape d'une opération de transvasement mettant en œuvre le dispositif de transvasement de la figure 2 ;
[Fig.6] La figure 6 est une vue en perspective montrant la manipulation du tube d'écoulement du dispositif de la figure 1 ;
[Fig.7] La figure 7 est une vue en section du dispositif de transvasement des figures 1 à 6 ;
[Fig.8] La figure 8 est une figure similaire à la figure 1 illustrant le degré de liberté en pivotement permis au tube d'écoulement.

### DESCRIPTION DÉTAILLÉE

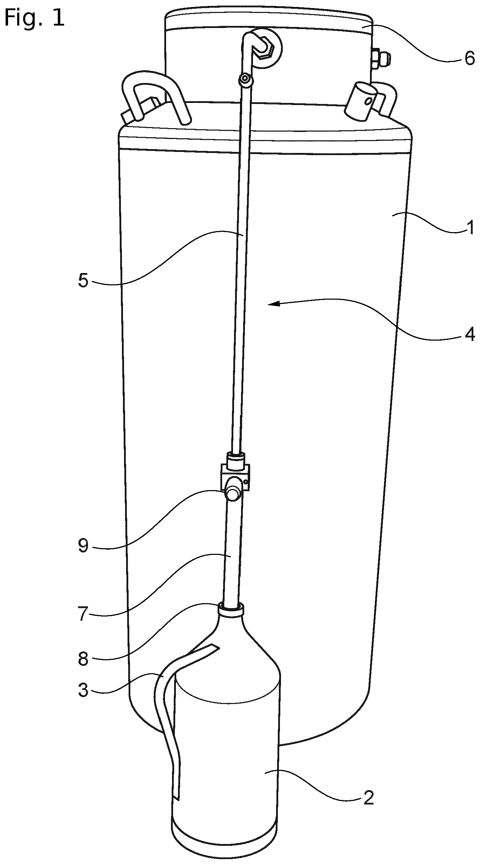

La figure 1 est une vue générale montrant une opération de transvasement d'un fluide cryogénique entre un réservoir 1 et une bouteille isotherme 2.

Le réservoir 1 a une capacité, dans le présent exemple, de 200 litres et présente une hauteur d'environ 1,50 mètre à 2 mètres. Le réservoir 1 est maintenu dans un endroit fixe et est destiné à approvisionner différentes bouteilles isothermes 2 dans le cadre d'un travail en laboratoire.

La bouteille isotherme 2 a quant à elle, dans le présent exemple, une capacité se situant aux alentours de 4 litres et est destinée à être transportée et manipulée, grâce à une anse 3, par un opérateur dans le cadre du travail en laboratoire. L'opérateur réalise périodiquement le remplissage de la bouteille isotherme 2 auprès du réservoir 1 par l'opération de transvasement manuel représentée à la figure 1.

L'opération de transvasement met en œuvre un dispositif de transvasement 4 qui permet le transfert du fluide cryogénique du réservoir 1 vers la bouteille isotherme 2 en toute sécurité.

Le dispositif de transvasement 4 comporte une canne de distribution 5 verticale rigide qui est reliée, par l'une de ses extrémités, à une tête de sortie 6 du réservoir 1. La canne de distribution 5 est prolongée par un tube d'écoulement 7 qui plonge dans la bouteille isotherme 2.

De préférence, le tube d'écoulement 7 présente un diamètre externe légèrement inférieur au diamètre de l'ouverture 8 de la bouteille isotherme 2. Le tube d'écoulement peut ainsi entrer dans l'ouverture 8 et la refermer partiellement pour limiter la sortie de fluide cryogénique vaporisé qui est présent dans la bouteille isotherme 2 durant le transvasement.

Dans la configuration représentée à la figure 1, le dispositif de transvasement 4 est dans sa position basse. Cette position basse du dispositif de transvasement 4 correspond à une position basse stable du tube d'écoulement 7, c'est à dire la position que le tube d'écoulement 7 occupe relativement à la canne de distribution 5 en l'absence de sollicitation.

Le tube d'écoulement 7 comporte par ailleurs une poignée 9 permettant le coulissement du tube d'écoulement 7 par rapport à la canne de distribution 5, vers le haut à partir de la position basse.

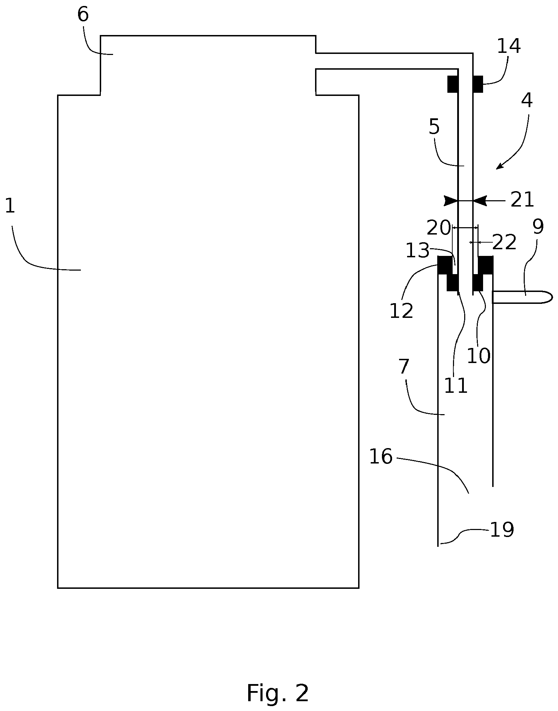

La figure 2 est une vue en coupe schématique du réservoir 1 muni du dispositif de transvasement 4. Le dispositif de transvasement 4 comporte une butée basse 10 fixée sur la paroi externe de la canne de distribution 5, au niveau du contour de la sortie de fluide 11 de la canne de distribution 5.

Le tube d'écoulement 7 comporte quant à lui une contrebutée basse 12 qui est, dans le présent exemple, constituée par un palier, par exemple en polyamide, emmanché dans le tube d'écoulement 7 et comportant un orifice central cylindrique 13. La contrebutée basse 12 peut, en plus d'être emmanchée, être collée dans le tube d'écoulement 7 avec une colle prévue pour les températures cryogéniques.

La butée basse 10 et la contrebutée basse 12 sont adaptées à coopérer de sorte que, sous l'effet de la gravité, le tube d'écoulement 7 puisse coulisser vers le bas jusqu'à la mise en position de la contrebutée basse 12 contre la butée basse 10, ce qui correspond à la position basse du dispositif de transvasement 4. Cette position basse du tube d'écoulement 7 correspond à la position la plus basse de sa bouche de sortie 16 qui est idéalement située à proximité du fond de la bouteille isotherme durant l'opération de transvasement.

Dans la configuration représentée à la figure 1, le tube d'écoulement 7 est dans sa position basse stable. Pour des raisons de sécurité, cette position est l'unique position stable du tube d'écoulement 7.

Le tube d'écoulement 7 peut être soulevé grâce à la poignée 9 qui entraine le coulissement vers le haut du tube d'écoulement 7 par rapport à la canne de distribution 5. Lorsque l'effort de soulèvement du tube d'écoulement 7 cesse, ce dernier revient à sa position basse stable sous l'effet de la gravité.

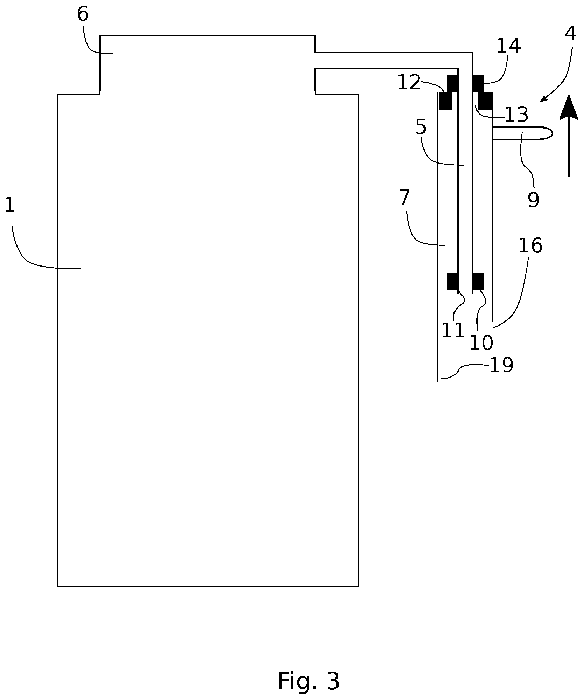

À partir de la position basse stable de la figure 2, un procédé de transvasement mettant en œuvre le dispositif de transvasement 4 va maintenant être décrit en référence aux figures 3 à 5.

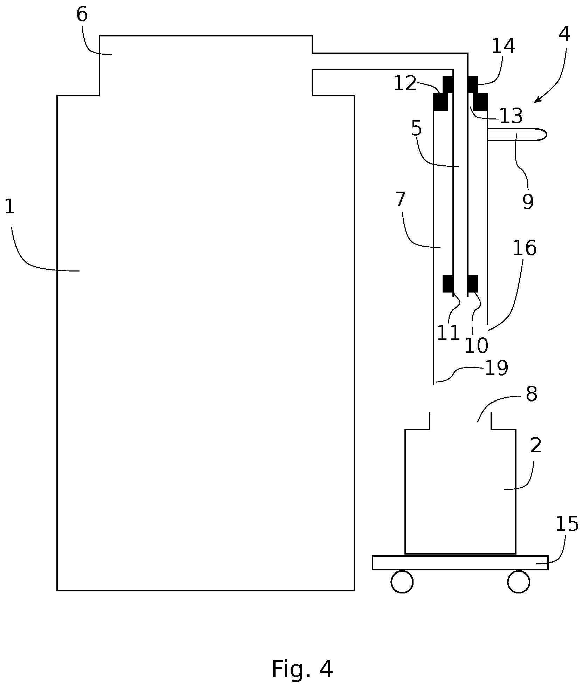

Sur la figure 3, un opérateur a saisi la poignée 9 et l'a sollicitée vers le haut, ce qui entraine le coulissement du tube d'écoulement 7 par rapport à la canne de distribution 5 jusqu'à la position haute représentée à la figure 3. Optionnellement, la canne de distribution 5 comporte une butée haute 14 qui limite, en coopérant avec la contrebutée basse 12, le coulissement du tube d'écoulement 7 à cette position haute. Ce soulèvement du tube d'écoulement 7 permet, dans la position haute, la mise en place de la bouteille isotherme 2 comme représentée à la figure 4. De préférence, la bouteille isotherme 2 est glissée sous le tube d'écoulement 7 grâce à un dispositif facilitant son déplacement, tel qu'un charriot à roulettes 15.

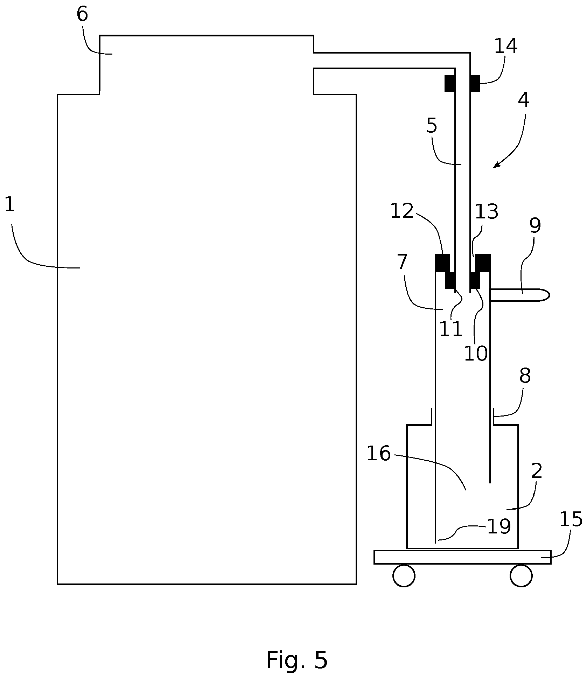

Comme représenté sur la figure 5, l'opérateur relâche son effort de maintien du tube d'écoulement 7 en position haute et accompagne la descente de la poignée 9 de sorte que le tube d'écoulement 7 retourne à sa position stable en s'assurant que la bouche de sortie 16 entre dans l'ouverture 8 de la bouteille isotherme 2.

Dans la configuration de la figure 5, le tube d'écoulement 7 en position basse est disposé de sorte que sa bouche de sortie 16 soit à proximité du fond de la bouteille isotherme 2. Une telle configuration garantit que même en cas de choc sur la bouteille isotherme 2 pendant l'opération de transvasement, cette dernière ne puisse pas se renverser au sol. Par ailleurs, l'opération de transvasement se déroule lorsque le tube d'écoulement 7 est dans sa position basse stable, ce qui est un gage de sécurité en ne permettant aucun mouvement spontané du dispositif de transvasement pendant l'opération.

La bouche de sortie du tube d'écoulement 7 comporte optionnellement un biseau 19 ou tout autre agencement favorisant la diffusion latérale du fluide cryogénique.

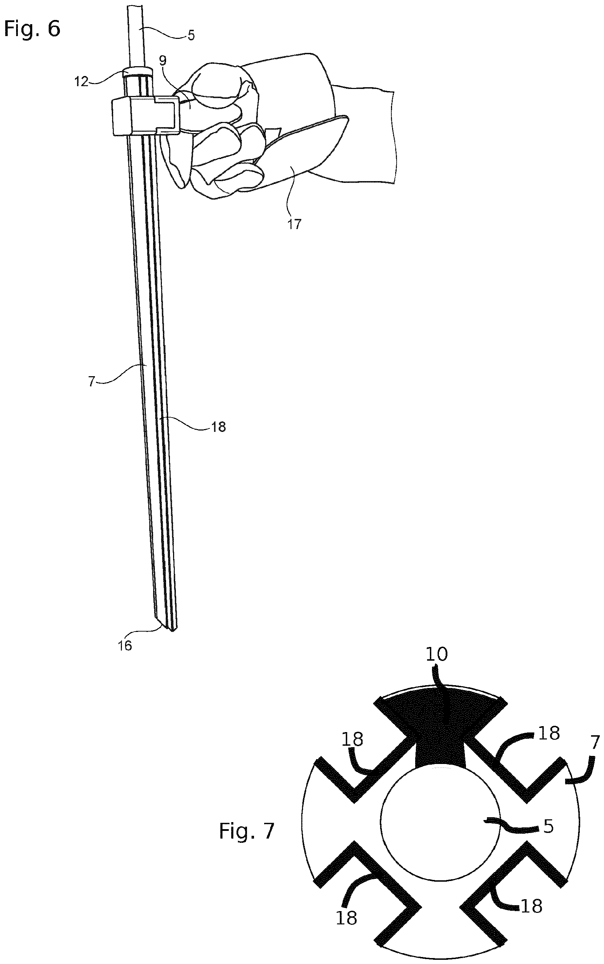

La figure 6 illustre la manipulation du tube d'écoulement 7 par un opérateur muni de gants anti-froid 17. Cette manipulation se limite à la prise de la poignée 9 et à un mouvement de montée ou de descente, qui est facilement réalisable malgré les gants anti-froid 17, entre les positions basse et haute du tube d'écoulement 7.

Une caractéristique préférée du dispositif de transvasement 4 prévoit des moyens pour empêcher la rotation du tube d'écoulement 7 par rapport à la canne de distribution 5, afin de limiter encore au strict nécessaire les mouvements possibles du tube d'écoulement 7. En effet, la limitation des mouvements possibles du tube d'écoulement 7 renforce la sécurité dans ce contexte de transvasement manuel de fluide cryogénique. Dans le présent exemple, le tube d'écoulement 7 est un profilé dont la section circulaire comporte des rainures longitudinales 18. La figure 7 représente une section de l'emboitement réalisé par la canne de distribution 5 et le tube d'écoulement 7. La butée basse 10 est ici constituée d'une noix parallélépipédique qui est ajustée entre les rainures 18 du tube d'écoulement 7 de manière à guider le mouvement de translation verticale du tube d'écoulement 7 relativement à la canne de distribution 5 et à empêcher la rotation du tube d'écoulement 7 autour d'un axe vertical.

Par ailleurs, selon une caractéristique préférée, la plus petite dimension interne 20 en section du tube d'écoulement 7 est supérieure d'au moins 10 % par rapport à la dimension externe 21 de la section correspondante de la canne de distribution 5 (voir figure 2).

L'expression « la plus petite dimension interne 20 en section du tube d'écoulement » se réfère au fait que le tube d'écoulement présente différentes formes de sections sur toute sa longueur (ces sections varient par la présence, dans le présent exemple, de la contrebutée basse 12 ou du biseau 19). Cette expression désigne la plus petite dimension interne présentée par l'ensemble de ces sections possibles du tube d'écoulement 7. Dans le présent exemple, la plus petite dimension interne 20 de la section du tube d'écoulement 7 est constituée par le diamètre de l'orifice central 13 de la contrebutée basse 12.

De manière similaire, l'expression « la dimension externe 21 de la section correspondante de la canne de distribution 5 » se réfère à la section de la canne de distribution 5 qui correspond à la section dans laquelle le tube d'écoulement 7 présente sa plus petite dimension interne. Cette expression désigne donc la dimension externe de la canne de distribution 5 qui est en vis-à-vis du tube d'écoulement là où ce dernier présente sa plus petite dimension interne. Dans le présent exemple, la dimension externe 21 de la section correspondante de la canne de distribution 5 est constituée par le diamètre externe de la canne de distribution 5 dans sa partie tubulaire en vis-à-vis de l'orifice central 13 de la contrebutée basse 12.

Il n'y a ainsi pas d'ajustement glissant entre le tube d'écoulement 7 et la canne de distribution 5. Le guidage en translation verticale du tube d'écoulement 7 est uniquement réalisé par la butée basse 10 et son ajustement dans le profil du tube d'écoulement 7. Dans le présent exemple, le diamètre externe de la canne de distribution 5 est de 14 mm et le jeu 22 (voir figure 2) laissé entre l'orifice central 13 du tube d'écoulement 7 et la canne de distribution 5 est de 1 mm.

Le jeu 22 a une double fonction :
- permettre au tube d'écoulement 7 de rester opérationnel, c'est-à-dire mobile en translation verticale par rapport à la canne de distribution 5, même après le transvasement. En effet, vu la température extrêmement basse du fluide cryogénique, une pellicule de glace se forme immédiatement à la surface de la canne de distribution 5 lors du passage du fluide cryogénique. Cette pellicule de glace est constituée par de l'eau initialement présente dans l'air ambiant et qui se condense sur la canne de distribution 5. Malgré cette pellicule de glace, le jeu 22 permet la translation vers le haut du tube d'écoulement 7 pour passer à la position de la figure 4 et pouvoir retirer la bouteille isotherme 2 en fin de transvasement ;
- permettre au tube d'écoulement 7 un degré de liberté en pivotement selon un axe. Ce degré de liberté facilite l'introduction du tube d'écoulement 7 dans la bouteille isotherme 2.

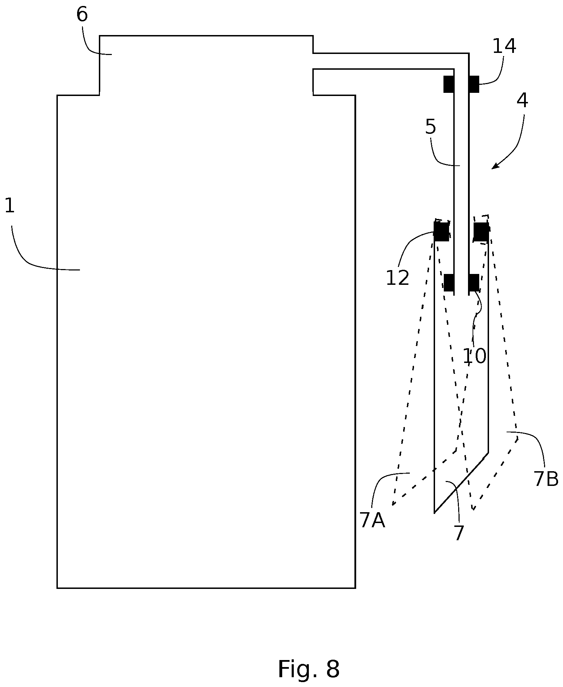

En référence à la figure 8, les deux positions extrêmes selon ce degré de liberté en pivotement du tube d'écoulement 7, qui sont permises par le jeu 22, sont représentées en pointillés. Ainsi, lorsque l'opérateur translate vers le bas le tube d'écoulement 7 pour introduire la bouche de sortie 16 dans l'ouverture 8 de la bouteille isotherme 2, ce degré de liberté permet de compenser les probables défauts de positionnement de la bouteille isotherme 2 sous le dispositif de transvasement 4. Le transvasement n'étant pas ici automatisé, cette fonction est avantageuse dans le présent contexte où le positionnement de la bouteille isotherme 2 est fait manuellement par l'opérateur.

Des variantes du dispositif de transvasement peuvent être mises en œuvre sans sortir du cadre de l'invention. Par exemple, toute autre forme de tubes, complémentaires ou non, peut être prévue pour la canne de distribution 5 et le tube d'écoulement 7, à partir du moment où le tube d'écoulement 7 entoure la canne de distribution 5 pour permettre l'écoulement du fluide cryogénique qui passe de la canne de distribution 5 au tube d'écoulement 7.

## Revendications

1. Dispositif de transvasement manuel (4) de fluide cryogénique, comportant une canne de distribution (5) verticale qui présente une sortie de fluide (11), ce dispositif étant **caractérisé en ce qu'**il comporte un tube d'écoulement (7) entourant la canne de distribution (5) et monté coulissant verticalement sur la canne de distribution (5), entre une positon haute et une position basse, la canne de distribution (5) comportant une butée basse (10) et le tube d'écoulement (7) comportant une contrebutée basse (12), la butée basse (10) et la contrebutée basse (12) étant agencées pour maintenir le tube d'écoulement (7) dans une unique position stable basse par rapport à la canne de distribution (5), le tube d'écoulement (7) comportant une poignée (9).

2. Dispositif selon la revendication 1, **caractérisé en ce que** la butée basse (10) est fixée sur le contour de la sortie de fluide (11) de la canne de distribution (5).

3. Dispositif selon l'une quelconque des revendications précédentes, **caractérisé en ce que** le tube d'écoulement (7) est ajusté sur la butée basse (10) selon un ajustement glissant permettant le coulissement vertical du tube d'écoulement (7) par rapport à la butée basse (10).

4. Dispositif selon l'une quelconque des revendications précédentes, **caractérisé en ce que** la plus petite dimension interne (20) en section du tube d'écoulement (7) est supérieure d'au moins 10 % par rapport à la dimension externe (21) de la section correspondante de la canne de distribution (5).

5. Dispositif selon la revendication 4, **caractérisé en ce que** la contrebutée basse (12) comporte un palier muni d'un orifice central (13) cylindrique constituant la plus petite dimension interne de la section du tube d'écoulement (7).

6. Dispositif selon l'une quelconque des revendications précédentes, **caractérisé en ce que** le tube d'écoulement (7) comporte des moyens antirotation bloquant la rotation autour d'un axe vertical du tube d'écoulement (7) par rapport à la canne de distribution (5).

7. Dispositif selon la revendication 6, **caractérisé en ce que** le tube d'écoulement (7) comporte des rainures longitudinales (18), les moyens antirotation étant constitués par un ajustement glissant entre le tube d'écoulement (7) et la butée basse (10).

8. Dispositif selon la revendication 7, **caractérisé en ce que** la butée basse (10) est ajustée entre les rainures longitudinales (18).

9. Procédé de transvasement manuel mettant en œuvre un dispositif de transvasement (4) selon l'une quelconque des revendications précédentes, **caractérisé en ce qu'**il comporte les étapes suivantes, le tube d'écoulement (7) étant initialement dans sa position basse stable :
- relier l'une des extrémités de la canne de distribution (5), à une tête de sortie (6) d'un réservoir (1) de fluide cryogénique ;
- translater verticalement le tube d'écoulement (7) par rapport à la canne de distribution (5) et maintenir le tube d'écoulement (7) en position haute ;
- présenter une bouteille isotherme (2) sous le tube d'écoulement (7) ;
- accompagner la descente du tube d'écoulement (7) vers sa positon basse stable en introduisant le tube d'écoulement (7) dans la bouteille isotherme (2).

10. Procédé selon la revendication 9, **caractérisé en ce que**, au cours de l'étape d'accompagner la descente du tube d'écoulement (7), il comporte une opération de pivotement du tube d'écoulement (7) autour d'un axe horizontal pour introduire le tube d'écoulement (7) dans la bouteille isotherme (2).

11. Procédé selon l'une des revendications 9 ou 10, **caractérisé en ce qu'**il comporte en outre les étapes suivantes :
- transvaser le fluide cryogénique dans la bouteille isotherme (2) ;
- relever le tube d'écoulement (7) en le translatant verticalement par rapport à la canne de distribution (5), et maintenir le tube d'écoulement (7) en position haute ;
- déplacer la bouteille isotherme (2) ;
- accompagner la descente du tube d'écoulement (7) vers sa positon basse stable.
